# EUROPEAN PATENT APPLICATION

(11) **EP 3 734 966 A1**
(43) Date of publication of application: **04.11.2020**
(21) Application number: 19172601.7
(22) Date of filing: 03.05.2019
(51) Int. Cl.: H04N 7/14, H04N 7/15

(54) **AN APPARATUS AND ASSOCIATED METHODS FOR PRESENTATION OF AUDIO**

(71) Applicant: Nokia Technologies Oy, 02610 Espoo (FI)
(72) Inventor: Laaksonen,, Lasse Juhani, 33210 Tampere (FI); Lehtiniemi,, Arto Juhani, 33880 Lempäälä (FI); Vilermo,, Miikka Tapani, 37200 Siuro (FI)
(74) Representative: Whiting, Gary

(57) **Abstract**

An apparatus comprising means configured to:
receive video imagery data and spatial audio data from a first device;
determine a main user in said video imagery based on main-user-identifying criteria;
determine an other user in said video imagery based on other-user-identifying criteria;
determine main user audio;
determine other user audio;
determine an avatar for representing the main user or the other user based on predetermined data or user input;
provide for display and presentation, at a second device, of said avatar and the main user audio and the other user audio, wherein at least one of the main user audio and the other user audio is provided for presentation with an audio-modifying effect, wherein the audio-modifying effect is pre-associated with said determined avatar.

## Description

### Technical Field

The present disclosure relates to the field of presentation of audio and, in particular, to the presentation of audio with associated avatars, such as for telecommunication or messaging. The present disclosure also relates to associated apparatus, methods and computer programs.

### Background

Telecommunication or telephony systems are being developed that provide for more than monophonic capture and presentation of audio. The audio of such telephony may comprise spatial audio. The presentation of such audio may require careful consideration to ensure the audio is clear and effective.

The listing or discussion of a prior-published document or any background in this specification should not necessarily be taken as an acknowledgement that the document or background is part of the state of the art or is common general knowledge. One or more aspects/examples of the present disclosure may or may not address one or more of the background issues.

### Summary

In an aspect of the disclosure there is provided an apparatus, the apparatus comprising means configured to:
receive video imagery data and spatial audio data captured by a first device, the spatial audio data comprising audio and directional information indicative of the direction from which the audio was captured;
determine at least one main user in said video imagery based on main-user-identifying criteria;
determine at least one other user in said video imagery based at least on other-user-identifying criteria;
determine main user audio of the at least one main user from the spatial audio data using a direction to the determined at least one main user and said directional information;
determine other user audio of the at least one other user from the spatial audio data using a direction to the determined at least one other user and said directional information;
determine an avatar for representing the at least one main user or the at least one other user based on at least one of predetermined data and a user input;
provide for display, at the second device, of said avatar; and
provide for presentation, at a second device, of the main user audio and the other user audio, wherein at least one of the main user audio and the other user audio is provided for presentation with an audio-modifying effect, wherein the audio-modifying effect is pre-associated with said determined avatar.

This may be advantageous as the audio-modifying effect may be pre-associated with said determined avatar based on the audio-modifying effect making the audio to which it is applied sound like the thing depicted by the avatar.

In one or more examples, the means are configured to determine a respective avatar for representing the at least one main user and a respective avatar for representing the or each of the at least one other user, the determination of the respective avatars based on at least one of the predetermined data and the user input. Thus, the determination of the avatar may comprise determining an avatar for at least one of the (i) at least one main user and (ii) at least one other user.

In one or more examples where there is more than one main user, each main user may have a respective avatar, which may be the same avatar in appearance or a different avatar. In one or more examples where there is more than one other user, each other user may have a respective avatar, which may be the same avatar in appearance or a different avatar.

In one or more examples, said avatar comprises a first avatar configured to represent at least the face of the at least one main users; and
wherein the first avatar is animated to provide facial expressions corresponding to facial expressions of the main user determined from the video imagery data.

In one or more examples, where there are a plurality of users, either main users or other users, each of them may be represented by a respective avatar.

In one or more examples, the means are configured to:
determine a second avatar for representing the at least one other user based on at least one of the first avatar, predetermined data or a user input;
provide for display, at the second device, of the second avatar.

In one or more examples the or each second avatar is animated to provide facial expressions corresponding to facial expressions of the corresponding at least one other user determined from the video imagery data.

In one or more examples, the second avatar is visually different to the first avatar in terms of at least one of shape, colour or size and the second avatar has a predetermined type associated therewith that corresponds to a predetermined type associated with the first avatar. In one or more examples, the first avatar comprises a face, such as a disembodied face, and the second avatar comprises a combination of a face and body. In one or more examples, the first avatar comprises a predetermined type comprising an animal and the second avatar comprises the same predetermined type and therefore the animal, which may be depicted differently to the first avatar.

In one or more examples, the video imagery data comprises video imagery simultaneously captured by two or more cameras of the first device, the cameras configured to capture different parts of a space around the first device; and
wherein the avatar comprises a second avatar to represent the at least one other user, and wherein the or each second avatar is provided for display, at the second device, in a group within the spatial extent of a display of the second device and to appear behind or with video imagery of the main user or a first avatar that represents the main user irrespective of the relative locations of the or each other user in the video imagery data.

In one or more examples,
the main user audio is provided for presentation at the second device either with a first audio-modifying effect or without an audio modifying effect; and
the other user audio is provided for presentation at the second device with a second audio-modifying effect, the second audio-modifying effect configured to make any voices in the other user audio presented incomprehensible.

In one or more examples, the first audio-modifying effect that is applied to the main user audio comprises a voice changer. In one or more examples, the first audio-modifying effect is configured not to make any voice in the main user audio incomprehensible. Accordingly, given the human ability to discern speech over substantial levels of background noise, the use of the second audio-modifying effect to make the voices of the other users incomprehensible (but audible) may advantageously improve the intelligibility of voices in the main user audio without removing the context that the main user is in a space with the other users.

In one or more examples, the main user audio is provided for presentation with a spatial audio effect such that the main user audio is to be perceived from a first-perceived direction.

In one or more examples, the other user audio is provided for presentation with one of:
an ambient audio effect such that the other user audio is not to be perceived to originate from any one direction; or
a spatial audio effect such that the other user audio is to be perceived from a second-perceived direction different to the first-perceived direction.

In one or more examples, the main-user-identifying criteria comprises one or more of:
identifying the main user using facial recognition and predetermined facial recognition data;
identifying the main user as the user closest to the first device in the video imagery at a predetermined assessment time;
identifying the main user as the user closest to the first device in the video imagery at a current time; or
identifying the main user as the user located in a direction from which audio was captured that meets a predetermined audio criterion using the directional information of the spatial audio data.

In one or more examples, the predetermined audio criterion comprises identifying the direction of the loudest source of audio or identifying the direction of the source of audio with the least reverberation. The loudest source of audio or that with the least reverberation may be indicative of the closest user to the first device.

In one or more examples, the other-user-identifying criteria comprises one or more of:
identifying the one or more other users using facial recognition and predetermined facial recognition data;
identifying the one or more other users using facial recognition to identify users around the first device and excluding the main user; or
identifying the other user as the one or more users located in one or more corresponding directions from which audio was captured using the directional information of the spatial audio data and excluding the main user.

In one or more examples, the means are configured to:
receive main user audio from the second device for presentation by the first device with a third audio-modifying effect comprising a voice changer, wherein the main user audio is captured by the second device;
receive main user audio from a third device for presentation by the first device with a fourth audio-modifying effect, different to the third audio-modifying effect, and comprising a voice changer, wherein the main user audio is captured by the third device; and
provide for said presentation by the first device of the main user audio from both the second device and the third device.

In one or more examples, the means are configured to:
receive third avatar information from the second device for visual presentation by the first device, the third avatar information representative of a third avatar for representing at least the face of a main user of the second device, wherein the main user audio from the second device is the audio of the main user of the second device;
receive fourth avatar information from the third device for visual presentation by the first device, the fourth avatar information representative of a fourth avatar for representing at least the face of a main user of the third device, wherein the main user audio from the third device is the audio of the main user of the third device; and
provide for presentation of the third avatar and the fourth avatar at different locations on a display of the first device;
wherein the third audio-modifying effect is associated with the third avatar; and
wherein the fourth audio-modifying effect is associated with the fourth avatar.

In one or more examples, the third or fourth audio-modifying effect is associated with the respective third or fourth avatar respectively in terms of a predetermined association, such as predetermined links between avatars and audio-modifying effects. In one or more examples, said the third audio-modifying effect is associated with the third avatar in terms of third avatar depicting an animal and the third audio-modifying effect is configured to cause the audio to which it is applied to sound like said animal. In one or more examples, said the fourth audio-modifying effect is associated with the fourth avatar in terms of fourth avatar depicting an animal and the fourth audio-modifying effect is configured to cause the audio to which it is applied to sound like said animal.

In one or more examples,
said the third audio-modifying effect is associated with the third avatar in terms of the third avatar depicting a first animal and the third audio-modifying effect is configured to cause the audio to which it is applied to sound like said first animal; and
said the fourth audio-modifying effect is associated with the fourth avatar in terms of the fourth avatar depicting a second animal and the fourth audio-modifying effect is configured to cause the audio to which it is applied to sound like said second animal.

In one or more examples, the means are configured to:
receive other user audio from the second device for presentation by the first device with a fifth audio-modifying effect wherein the other user audio is captured by the second device; and
receive other user audio from the third device for presentation by the first device with a sixth audio-modifying effect wherein the other user audio is captured by the third device; and
provide for said presentation by the first device of the other user audio from both the second device and the third device; wherein
the fifth audio-modifying effect applied to the other user audio from the second device is associated with the third audio-modifying effect applied to the main user audio from the second device;
the sixth audio-modifying effect applied to the other user audio from the third device is associated with the fourth audio-modifying effect applied to the main user audio from the third device.

In one or more examples, the audio received from the second and third devices represents the audio of a plurality of users captured by each of the second and third devices, wherein the audio captured thereby is separated into said main user audio comprising the audio from at least one of the plurality of users captured by the second and third devices, and the other user audio comprising the audio from any other users of the plurality of users captured by the second and third devices.

In one or more examples, the third and fifth audio-modifying effects are associated in terms of them being configured to cause the audio to which they are applied to sound like the same first animal. In one or more examples, the fourth and sixth audio-modifying effects are associated in terms of them being configured to cause the audio to which they are applied to sound like the same second animal.

In one or more examples, the means are configured to:
receive fifth avatar information from the second device for visual presentation by the first device, the fifth avatar information representative of a fifth avatar for representing at least at least one other user of the second device, wherein the other user audio from the second device is the audio of the at least one other user of the second device;
receive sixth avatar information from the third device for visual presentation by the first device, the sixth avatar information representative of a sixth avatar for representing at least one other user of the third device, wherein the other user audio from the third device is the audio of the at least one other user of the third device; and
provide for presentation of the fifth avatar and the sixth avatar at different locations on a display of the first device.

In one or more examples, the other user audio from the second device and the other user audio from the third device is provided for presentation with one of:
an ambient audio effect such that other user audio is not to be perceived to originate from any one direction; and
a spatial audio effect such that the other user audio is to be perceived from a fifth-perceived direction and sixth-perceived direction respectively, the fifth-perceived direction within a threshold angular separation of the third-perceived direction and the sixth-perceived direction within a threshold angular separation of the fourth perceived-direction.

In one or more examples, the means are configured to, based on signalling, from one or both of the second device and the third device, indicative that the second device and the third device are in a common location,
determine at least one main user in video imagery captured by the second device based on facial recognition and main-user-identifying criteria;
determine at least one main user in video imagery captured by the third device based on facial recognition and main-user-identifying criteria;
determine at least one other user in video imagery captured by the second device based on facial recognition;
determine at least one other user in video imagery captured by the third device based on facial recognition;
group the least one other users determined from the video imagery of both the second and third device into a first group associated with the main user of the second device and a second group associated with the main user of the third device based on grouping criteria, wherein one or more other users determined from the video imagery captured by the second device who also appear in the video imagery captured by the third device are assigned to only one of said first group and said second group;
provide for display, by said first device, of the at least one other user of the first group as a fifth avatar; and
provide for display, by said first device, of the at least one other user of the second group as a sixth avatar; and
provide for revision of the grouping of the at least one other user determined from the video imagery of both the second and third device based on movement of the at least one other users relative to the at least one main user associated with said first and second group determined from said video imagery;
provide for display, by said first device, of the at least one other user of the revised first group as a fifth avatar; and
provide for display, by said first device, of the at least one other user of the revised second group as a sixth avatar.

In one or more examples, the grouping criteria may be based on which users are closest to the determined main user of each group or within a region defined relative to the main user.

In one or more examples the means comprises at least one processor and at least one memory comprising computer program code, the at least one memory and the computer program code configured to perform the functionality defined herein.

In a further aspect there is provided a method, the method comprising:
receiving video imagery data and spatial audio data captured by a first device, the spatial audio data comprising audio and directional information indicative of the direction from which the audio was captured;
determining at least one main user in said video imagery based on main-user-identifying criteria;
determining at least one other user in said video imagery based at least on other-user-identifying criteria;
determining main user audio of the at least one main user from the spatial audio data using a direction to the determined at least one main user and said directional information;
determining other user audio of the at least one other user from the spatial audio data using a direction to the determined at least one other user and said directional information;
determining an avatar for representing the at least one main user or the at least one other users based on at least one of predetermined data and a user input;
providing for display, at the second device, of said avatar; and
providing for presentation, at a second device, of the main user audio and the other user audio, wherein at least one of the main user audio and the other user audio is provided for presentation with an audio-modifying effect, wherein the audio-modifying effect is pre-associated with said determined avatar.

In one or more examples, said avatar comprises a first avatar configured to represent at least the face of the at least one main users; and
the method comprises animating the first avatar to provide facial expressions corresponding to facial expressions of the main user determined from the video imagery data.

In one or more examples, the method comprises
determining a second avatar for representing the at least one other user based on at least one of the first avatar, predetermined data or a user input;
providing for display, at the second device, of the second avatar.

In one or more examples, the video imagery data comprises video imagery simultaneously captured by two or more cameras of the first device, the cameras configured to capture different parts of a space around the first device; and
wherein the avatar comprises a second avatar to represent the at least one other user, and wherein the method comprises providing for display of the or each second avatar, at the second device, in a group within the spatial extent of a display of the second device and to appear behind or with video imagery of the main user or a first avatar that represents the main user irrespective of the relative locations of the or each other user in the video imagery data.

In one or more examples, the method comprises
providing for presentation of the main user audio at the second device either with a first audio-modifying effect or without an audio modifying effect; and
providing for presentation of the other user audio at the second device with a second audio-modifying effect, the second audio-modifying effect configured to make any voices in the other user audio presented incomprehensible.

In one or more examples, the determining using the main-user-identifying criteria comprises one or more of:
identifying the main user using facial recognition and predetermined facial recognition data;
identifying the main user as the user closest to the first device in the video imagery at a predetermined assessment time;
identifying the main user as the user closest to the first device in the video imagery at a current time; or
identifying the main user as the user located in a direction from which audio was captured that meets a predetermined audio criterion using the directional information of the spatial audio data.

In one or more examples, the determining using the other-user-identifying criteria comprises one or more of:
identifying the one or more other users using facial recognition and predetermined facial recognition data;
identifying the one or more other users using facial recognition to identify users around the first device and excluding the main user; or
identifying the other user as the one or more users located in one or more corresponding directions from which audio was captured using the directional information of the spatial audio data and excluding the main user.

In one or more examples, the method comprises receiving main user audio from the second device for presentation by the first device with a third audio-modifying effect comprising a voice changer, wherein the main user audio is captured by the second device;
receiving main user audio from a third device for presentation by the first device with a fourth audio-modifying effect, different to the third audio-modifying effect, and comprising a voice changer, wherein the main user audio is captured by the third device; and
providing for said presentation by the first device of the main user audio from both the second device and the third device.

In one or more examples, the method comprises receiving third avatar information from the second device for visual presentation by the first device, the third avatar information representative of a third avatar for representing at least the face of a main user of the second device, wherein the main user audio from the second device is the audio of the main user of the second device;
receiving fourth avatar information from the third device for visual presentation by the first device, the fourth avatar information representative of a fourth avatar for representing at least the face of a main user of the third device, wherein the main user audio from the third device is the audio of the main user of the third device; and
providing for presentation of the third avatar and the fourth avatar at different locations on a display of the first device;
wherein the third audio-modifying effect is associated with the third avatar; and
wherein the fourth audio-modifying effect is associated with the fourth avatar.

In one or more examples, the third audio-modifying effect is associated with the third avatar in terms of the third avatar depicting a first animal and the third audio-modifying effect is configured to cause the audio to which it is applied to sound like said first animal; and
said the fourth audio-modifying effect is associated with the fourth avatar in terms of the fourth avatar depicting a second animal and the fourth audio-modifying effect is configured to cause the audio to which it is applied to sound like said second animal.

In one or more examples, the method comprises
receiving other user audio from the second device for presentation by the first device with a fifth audio-modifying effect wherein the other user audio is captured by the second device; and
receiving other user audio from the third device for presentation by the first device with a sixth audio-modifying effect wherein the other user audio is captured by the third device; and
providing for said presentation by the first device of the other user audio from both the second device and the third device; wherein
the fifth audio-modifying effect applied to the other user audio from the second device is associated with the third audio-modifying effect applied to the main user audio from the second device;
the sixth audio-modifying effect applied to the other user audio from the third device is associated with the fourth audio-modifying effect applied to the main user audio from the third device.

In one or more examples, the method comprises
receiving fifth avatar information from the second device for visual presentation by the first device, the fifth avatar information representative of a fifth avatar for representing at least at least one other user of the second device, wherein the other user audio from the second device is the audio of the at least one other user of the second device;
receiving sixth avatar information from the third device for visual presentation by the first device, the sixth avatar information representative of a sixth avatar for representing at least one other user of the third device, wherein the other user audio from the third device is the audio of the at least one other user of the third device; and
providing for presentation of the fifth avatar and the sixth avatar at different locations on a display of the first device.

In one or more examples, the method comprises, based on signalling from one or both of the second device and the third device, indicative that the second device and the third device are in a common location,
determining at least one main user in video imagery captured by the second device based on facial recognition and main-user-identifying criteria;
determining at least one main user in video imagery captured by the third device based on facial recognition and main-user-identifying criteria;
determining at least one other user in video imagery captured by the second device based on facial recognition;
determining at least one other user in video imagery captured by the third device based on facial recognition;
grouping the least one other users determined from the video imagery of both the second and third device into a first group associated with the main user of the second device and a second group associated with the main user of the third device based on grouping criteria, wherein one or more other users determined from the video imagery captured by the second device who also appear in the video imagery captured by the third device are assigned to only one of said first group and said second group;
providing for display, by said first device, of the at least one other user of the first group as a fifth avatar; and
providing for display, by said first device, of the at least one other user of the second group as a sixth avatar; and
providing for revision of the grouping of the at least one other users determined from the video imagery of both the second and third device based on movement of the at least one other users relative to the at least one main user associated with said first and second group determined from said video imagery;
providing for display, by said first device, of the at least one other user of the revised first group as a fifth avatar; and
providing for display, by said first device, of the at least one other user of the revised second group as a sixth avatar.

In a further aspect there is provided a computer readable medium comprising computer program code stored thereon, the computer readable medium and computer program code being configured to, when run on at least one processor, perform the method of:
receiving video imagery data and spatial audio data captured by a first device, the spatial audio data comprising audio and directional information indicative of the direction from which the audio was captured;
determining at least one main user in said video imagery based on main-user-identifying criteria;
determining at least one other user in said video imagery based at least on other-user-identifying criteria;
determining main user audio of the at least one main user from the spatial audio data using a direction to the determined at least one main user and said directional information;
determining other user audio of the at least one other user from the spatial audio data using a direction to the determined at least one other user and said directional information;
determining an avatar for representing the at least one main user or the at least one other users based on at least one of predetermined data and a user input;
providing for display, at the second device, of said avatar; and
providing for presentation, at a second device, of the main user audio and the other user audio, wherein at least one of the main user audio and the other user audio is provided for presentation with an audio-modifying effect, wherein the audio-modifying effect is pre-associated with said determined avatar.

In a further example aspect there is provided an apparatus comprising:
at least one processor; and
at least one memory including computer program code,
the at least one memory and the computer program code configured to, with the at least one processor, cause the apparatus to perform at least the following:
   receive video imagery data and spatial audio data captured by a first device, the spatial audio data comprising audio and directional information indicative of the direction from which the audio was captured;
   determine at least one main user in said video imagery based on main-user-identifying criteria;
   determine at least one other user in said video imagery based at least on other-user-identifying criteria;
   determine main user audio of the at least one main user from the spatial audio data using a direction to the determined at least one main user and said directional information;
   determine other user audio of the at least one other user from the spatial audio data using a direction to the determined at least one other user and said directional information;
   determine an avatar for representing the at least one main user or the at least one other user based on at least one of predetermined data and a user input;
   provide for display, at the second device, of said avatar; and
      provide for presentation, at a second device, of the main user audio and the other user audio, wherein at least one of the main user audio and the other user audio is provided for presentation with an audio-modifying effect, wherein the audio-modifying effect is pre-associated with said determined avatar.

It will be appreciated that the optional features of the first aspect apply equally to this aspect.

The present disclosure includes one or more corresponding aspects, examples or features in isolation or in various combinations whether or not specifically stated (including claimed) in that combination or in isolation. Corresponding means and corresponding functional units (e.g., function enabler, speaker selector, amplifier, display device) for performing one or more of the discussed functions are also within the present disclosure.

Corresponding computer programs for implementing one or more of the methods disclosed are also within the present disclosure and encompassed by one or more of the described examples.

The above summary is intended to be merely exemplary and non-limiting.

### Brief Description of the Figures

A description is now given, by way of example only, with reference to the accompanying drawings, in which:
Figure 1 illustrates an example apparatus as part of a device along with two other devices which may be in communication with the apparatus;
Figure 2 illustrates the example device of figure 1 showing the capture of visual imagery and audio of a main user and, in this example, two other users;
Figure 3 illustrates an example arrangement of main holding the apparatus with other users around them and an example of what may be presented at a second device;
Figure 4 illustrates two examples of what may be presented at a second device;
Figure 5 illustrates a further example of what may be presented at a second device;
Figure 6 illustrates an example of a three-party teleconference and what may be presented at the first device;
Figure 7 illustrates a similar example to figure 6 along with use of spatial audio to convey the position of the other users relative to the main users at each location;
Figure 8 shows a flowchart illustrating an example method; and
Figure 9 shows a computer readable medium.

### Description of Example Aspects

In one or more examples, the way in which audio is captured and presented can be used to convey information about the environment in which a user is present. Alternatively, or in addition, the way in which audio is captured and presented can be used improve the intelligibility for a listener.

Telecommunication or telephony systems are being developed that provide for more than monophonic capture and monophonic presentation of audio. Immersive telephony systems are being developed, such as by the 3rd Generation Partnership Project (3GPP), that will enable a new level of immersion in telephony services. Immersive telephony may comprise the use of spatial audio presentation techniques and the capture of spatial audio content in the provision of telecommunication between users. Such service can be realized, e.g., over a mobile 4G or 5G network by a multi-microphone spatial audio capture and processing, encoding in a suitable immersive audio format, transmission and decoding, and binaural or loudspeaker presentation. Such systems may provide for transmission of and presentation of immersive, spatial audio content, such as parametric spatial audio. This may enable receiving and sending of an enveloping audio scene from/to the telecommunication call participants or users. Thus, for example, when a remote user calls to a user, the user can experience the audio environment around the remote user as if he/she was physically located at the location of the remote user and vice versa.

The way in which the audio is presented for said telecommunication may provide further advantages. The proliferation of high-quality spatial audio services, applications and devices capable of rendering the spatial audio (e.g. head-tracked binaural audio) will likely lead to significant increase in their use.

In one or more examples, in terms of audio capture, a device may be provided with a first microphone (or more than one microphone) configured to detect a user's voice and one or more second microphones configured to detect audio from elsewhere around the user. It will be appreciated that with multi-microphone arrangements the same audio may be detected by more than one microphone and therefore audio processing techniques may be used to separate the voice audio detected primarily by the first microphone from the audio detected by the second microphones. For example, if a mobile telephone is used to capture the audio, a microphone on the front face may be configured to capture, primarily, the voice audio of the user and a microphone(s) on the back/sides of the mobile telephone may be configured to capture ambient audio around the device. In one or more examples, a single microphone may be used and audio processing algorithms may be used to separate the audio of a main user from any ambient audio from other persons around the device, wherein such algorithms are known to those skilled in the art. In one or more examples, all or some of the microphones in a device are used to detect user's a voice using beamforming and all or some of the microphones in the device are used to detect audio from elsewhere around the user using beamforming, wherein beamforming is known to those skilled in the art.

In one or more examples, the audio may be captured as spatial audio that includes directional information indicative of a direction of arrival of the audio or component parts thereof. The directional information of spatial audio enables, when presented, the spatial audio to be perceived as originating from one or more directions corresponding to the direction(s) of arrival, which may be used to recreate the audio scene at the location of capture.

Thus, spatial audio comprises audio presented in such a way to a user that it is perceived to originate from a particular location or direction, as if the source of the audio was located at that particular location or direction. The particular location or direction may not be aligned with the location of a speaker that presents the audio. Spatial audio content comprises audio for presentation as spatial audio and, as such, typically comprises audio having directional information (either explicitly specified as, for example, metadata or inherently present in the way the audio is captured), such that the spatial audio content can be presented such that its component audio is perceived to originate from one or more points or one or more directions in accordance with the directional information. One way to encode and deliver spatial audio for an immersive audio telecommunication call is to encode the sources of audio in the audio scene separately. Various encoding formats exist including, e.g., First Order Ambisonics (FOA)/Higher Order Ambisonic (HOA), Dolby 5.1, Directional Audio Coding (DirAC) and other spatial audio encoding schemes.

In one or more examples, non-spatial audio content may be presented as spatial audio. Thus, "conventional" monophonic or stereophonic audio (or audio converted to such a format) may be provided for presentation such that it will be perceived to originate from a particular location or direction. One or more of the embodiments described herein may present spatial audio based on spatial audio content or non-spatial audio content.

The spatial positioning of the spatial audio may be provided by spatial audio effects applied to the audio content. The spatial audio effects include 3D audio effects, such as those that utilise Head Related Transfer Functions (HRTFs) to create a spatial audio space (aligned with a real-world space in the case of augmented reality) in which audio can be positioned for presentation to a user using headphones. Spatial audio may be presented for loudspeakers, by using vector-base-amplitude panning techniques to position the perceived aural origin of the audio content. In other embodiments Ambisonics audio presentation may be used to present spatial audio.

Spatial audio may use one or more of volume differences, timing differences and coherence differences between audible presentation to each of a user's ears to create the perception that the origin of the audio is at a particular location or in a particular direction in space. The perceived distance to the perceived origin of the audio may be rendered by controlling the amount of reverberation and gain to indicate closeness or distance from the perceived source of the spatial audio. It will be appreciated that spatial audio presentation as described herein may relate to the presentation of audio with only a perceived direction towards its origin as well as the presentation of audio such that the origin of the audio has a perceived location, e.g. including a perception of distance from the user.

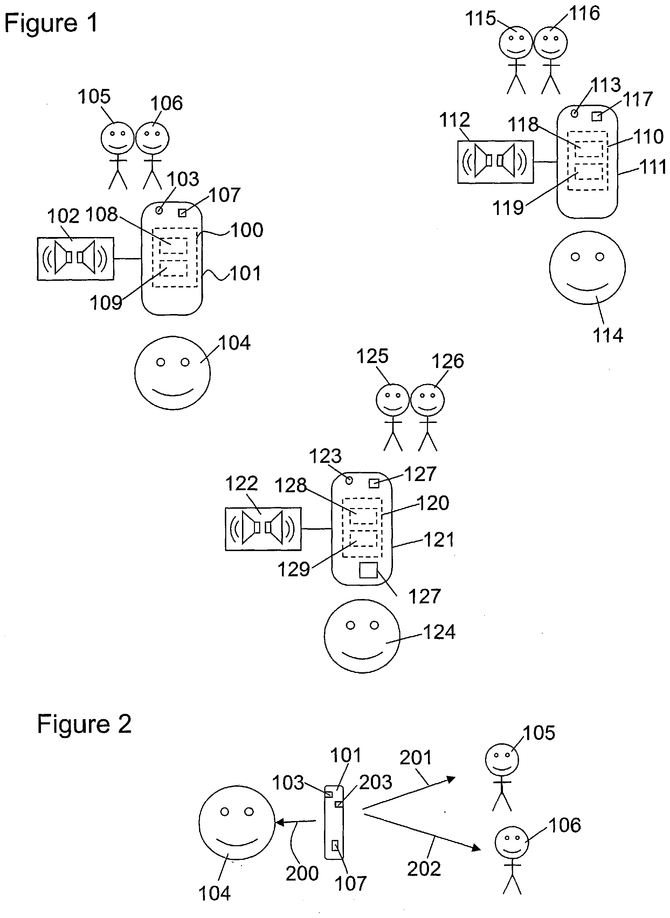

Example Figure 1 shows an apparatus 100 that may be used to capture audio and optionally video of a scene around the apparatus 100. The apparatus 100 is shown as part of a mobile telephone or smartphone or, more generally, as part of a first device 101. Thus, the first device 101 may have application in the field of telecommunication and therefore in one or more examples that follow, the audio may be considered as telecommunication audio. However, it will be appreciated that reference to telecommunication infers no limitation on how the audio is delivered between devices and may be delivered via traditional telephone networks, mobile or cell-phone based networks, data networks such as the Internet using voice over IP or any telephony service whether packet based or circuit switched. The first device 101 may include a display for displaying visual content, such as under the control of the apparatus 100. The first device 101 may include an audio presentation device 102, for example headphones, for presenting audio, such as in binauralized form which is suitable for presentation of spatial audio. The audio may be presented under the control of the apparatus 100. The first device 101 may further provide the apparatus 100 with use of one or more cameras 103 for capturing the visual scene around the device 101, which may include at least one main user 104 and one or more other users 105, 106. The first device 101 may provide the apparatus 100 with use of one or more microphones 107 for capturing the audio scene around the device 101, such as the audio from the at least one main user 104 and the one or more other users 105, 106. The microphones 107 may comprise a microphone array. The one or more microphones may be configured to capture spatial audio.

Figure 1 also shows a second apparatus 110 as part of a second device 111. The second apparatus 110 and second device 111 is substantially similar to the first apparatus 100 and first device 101 and therefore may provide the second apparatus 110 with data from a corresponding camera 113 and microphone(s) 117 and with the capability to display content on a display and present audio using an audio presentation device 112.

Figure 1 also shows a third apparatus 120 as part of a third device 121. The third apparatus 120 and third device 121 is substantially similar to the first apparatus 100 and first device 101 and therefore may provide the third apparatus 120 with data from a corresponding camera 123 and microphone(s) 127 and with the capability to display content on a display and present audio using an audio presentation device 122.

Thus, in this example, the apparatus 100 comprises an entity that may request and receive the video imagery data and request and receive the spatial audio data from other components, i.e. from the camera(s) and microphone(s) or a spatial audio processor that generates spatial audio data from the microphone signals and any other location based information that may be captured for the purpose of generating spatial audio data of the first device 101. In one or more other examples, the one or more cameras and one or more microphones may not be part of a first device, such as a mobile telephone, and, instead, may be mounted in the space with the main user and other users. Thus, the apparatus 100 may be configured to receive the video imagery data and spatial audio data from different devices (not shown). Thus, a room may have one or more cameras and one or more microphones installed therein and the apparatus 100 is configured to receive information from those cameras and microphones for performing its function. In one or more other examples, the apparatus 100 may include the one or more cameras and one or more microphones.

In one or more examples, the first to third apparatuses 100, 110, 120 may each be configured to provide the functionality described herein. In one or more examples, two or more of the first to third apparatuses 100, 110, 120 may be configured to operate together to provide the functionality described herein. In one or more examples, the first to third apparatuses 100, 110, 120 may be configured to operate in a master-slave configuration where one of the apparatuses designated a slave performs the instructions provided to it from one of the apparatuses designated a master and the master-slave configuration provides the functionality described herein.

It will be appreciated that in other examples the apparatus 100, 110, 120 may comprise an apparatus which is in communication with one, two, three or more of the first to third devices 101, 111, 121. Such an embodiment of the apparatus may comprise a server in communication with the devices. In one or more other examples, the apparatus may be distributed over two or more of the first device 101, the second device 111, the third device 121 and a server in communication with one or more of the other devices. In one or more other examples, not all of the first to third devices 101, 111, 121 may include a corresponding apparatus as, for example, the apparatus 100 of the first device 101 may provide the functionality described herein for the second device 111.

The apparatus 100, however it is arranged and embodied, will now be described. Said description can be applied to the other apparatuses 110, 120. The apparatus 100 may include an input to receive spatial audio data such as from the one or more microphones 107, 117, 127. The apparatus 100 may include an input to receive video imagery data such as from the one or more cameras 103, 113, 123. It will be appreciated that the apparatus 100 may include further inputs. The apparatus 100 may include an output to provide signalling to cause the presentation of visual information or audio at its associated device 101 or at a remote device, such as the second device 111 or third device 121.

The apparatuses 100, 110, 120 may comprise or be connected to a processor 108, 118, 128 and a memory 109, 119, 129 and may be configured to execute computer program code. The apparatus 100 may have only one processor 108, 118, 128 and one memory 109, 119, 129 but it will be appreciated that other embodiments may utilise more than one processor and/or more than one memory (e.g. same or different processor/memory types). Further, the apparatus 100, 110, 120 may be an Application Specific Integrated Circuit (ASIC).

The processor may be a general purpose processor dedicated to executing/processing information received from other components, such as audio or video in accordance with instructions stored in the form of computer program code in the memory.

The memory 109, 119, 129 (not necessarily a single memory unit) is a computer readable medium (solid state memory in this example, but may be other types of memory such as a hard drive, ROM, RAM, Flash or the like) that stores computer program code. This computer program code stores instructions that are executable by the processor, when the program code is run on the processor. The internal connections between the memory and the processor can be understood, in one or more example embodiments, to provide an active coupling between the processor and the memory to allow the processor to access the computer program code stored on the memory.

In this example, the respective processors and memories are electrically connected to one another internally to allow for electrical communication between the respective components. In this example, the components are all located proximate to one another so as to be formed together as an ASIC, in other words, so as to be integrated together as a single chip/circuit that can be installed into an electronic device. In some examples one or more or all of the components may be located separately from one another.

Example Figure 2 shows a further example of the first device 101 comprising a first camera 103 and a second camera 203 for capturing the scene around the device 101 including the main user 104 and the other users 105, 106. The cameras may be configured to point in different directions to capture a wide, such as greater than 180-degree field of view around first device. The one or more cameras in any of the embodiments may include depth perception capabilities and may therefore comprise a spaced camera pair for detecting depth or any other means for detecting depth, such as associated distance sensor. The apparatus 100 may be configured to identify faces using facial recognition. The apparatus 100 may be configured to recognise specific faces for which it has predetermined facial recognition data that characterises the face to be recognised. The first device 101, using the microphone(s) 107, may be configured to capture spatial audio comprising the audio from at least the main user 104 and the other users 105, 106 along with directional information 200, 201, 202 indicative of the direction from which the audio was captured. The first device 101 may perform these actions under the control of the apparatus 100.

In one or more examples, the apparatus 100 may be configured to provide images, such as video images of the users 104, 105, 106 to the one or more other of the devices 111, 121 for display. Thus, the images may provide the visual aspect of a "video call" or an immersive virtual reality call or for animated/video messaging. Those images may, in one or more examples, be separated from background imagery, e.g. cut-out from the background. In one or more examples, one or more of the users 104, 105, 106 may be represented as an avatar rather than by imagery of their face/body. In one or more examples, the avatar may comprise an avatar for representing at least the face or body of each of the main user 104 and the other users 105, 106. The avatar may be animated to provide facial expressions corresponding to facial expressions of the identified main user, the facial expressions determined from the video imagery. Thus, the apparatus 100 may provide the avatar for display at one of the other devices 111, 121 to represent one of the users captured by the cameras and provide for animation of that avatar to show corresponding live facial expressions. Thus, in one or more examples, the audio of the user presented at one of the other devices 111, 121 will correspond to the mouth movements of the avatar presented at one of the other devices 111, 121. It will be appreciated that facial expressions in addition to or other than mouth movements may be represented by the avatar, such as one or more of eye movements, open/closed condition of the eyes, eyebrow position, mouth shape, facial creases, chin position among others. Such avatars may be considered to comprise a virtual mask.

The apparatus 100 may comprise means, such as the processor 108 and memory 109 and computer program code, configured to receive video imagery data captured by the first device 101 and, in particular the one or more cameras 103, 203 of the first device 101. Thus, the apparatus 100 may instruct the first device 101 to capture the video imagery and provide the resulting video imagery data to the apparatus. In one or more examples, the capture of video imagery from more than one camera (which are configured to capture different parts of the space around the device) enables the apparatus 100 to provide functionality that applies to the other users 105, 106 or persons around the main user 104 of the first device 101 that may not be within the field view of a single camera.

The apparatus 100 may also receive spatial audio data captured by the first device 101 and, in particular, the one or more microphones thereof or spatial audio processor(s) associated with the microphones. In one or more examples, the apparatus 100 may include the functionality of a spatial audio processor. As such it may be configured to generate the spatial audio data from the microphone signals that represent audio captured by the one or more microphones. Information representing the direction towards audio may be analysed from the microphone signals using known methods such as beamforming, Time Difference Of Arrival (TDOA) and others. The spatial audio data comprises audio that includes directional information indicative of the direction from which the audio was captured. Thus, the apparatus 100 may instruct the first device 101 to capture the audio and provide the resulting spatial audio data to it. The receipt of spatial audio data enables the apparatus to provide functionality that applies to the audio from the other users 105, 106 that may be located around the first device 101 but spaced from the main user 104.

The apparatus 100 may be configured to determine at least one main user in said video imagery based on main-user-identifying criteria. Thus, facial recognition techniques, as will be known to those skilled in the art, can be used to identify the presence of faces in the video imagery data. In one or more examples, the apparatus may have predetermined facial recognition data related to the owner of the first device 101 and, out of the faces present in the video imagery data, the apparatus 100 may provide for the owner to be recognised and designated the main user 104. In other examples, predetermined facial recognition data may not be required and instead the apparatus 100 may be configured to assign the closest face out of the faces present in the video imagery data as the main user 104. Thus, the main-user-identifying criteria comprises one or more of: identifying the main user 104 based on the predetermined facial recognition data; identifying the main user as the user or detected face closest to the first device 101 in the video imagery at a predetermined assessment time, such as the start of the video call for which the video imagery and audio is captured or when the faces are detected or when requested by user input; identifying the main user as the user located in a direction from which audio was captured that meets predetermined audio criteria using the directional information of the spatial audio data; and identifying the main user 104 as the user closest to the first device 101 in the video imagery at a current time. Thus, the user designated as being the main user 104 may change over time as different users get closer and further from the first device or generate audio for capture or are more active in the visual or audio scene than other users.

In one or more examples, the predetermined audio criteria comprise identifying the direction of the loudest source of audio or identifying the direction of the source of audio with the least reverberation. The loudest source of audio or that with the least reverberation may be indicative of the closest user to the first device, which may be used to designate the main user. In summary, the apparatus may be configured to designate a main user using proprieties of the video imagery data and spatial audio data.

The apparatus 100 may be configured to determine at least one other user in said video imagery based at least on facial recognition. Thus, one or more of the faces identified as present in the video imagery data, other that the face designated as the main user 104, may be designated as the at least one other user. In one or more other examples, and more generally, other-user-identifying criteria may be used to assign which of the persons present in the video imagery should be designated other users. For example, the closest n number of faces or up to n faces present in the video imagery may be designated as the other users, excluding any of those faces that are designated the main user. In one or more other examples, predetermined facial recognition data for associates of the main user 104 may be accessible to the apparatus 100 and used to recognise the faces present in the video imagery and only faces that are recognised are designated as the other users. In one or more other examples, the direction from which audio is received as specified in the directional information may be used to identify the direction towards users and thus the designation of the one or more other users. Accordingly, the direction to a source of audio may be cross referenced with the video imagery data to perhaps designate the source of the audio as an other user.

The apparatus 100 may be configured to attribute the audio in the spatial audio data to the main and other users 104, 105, 106. Thus, the apparatus 100 may determine main user audio of the at least one main user 104 from the spatial audio data using a direction to the identified at least one main user determined from the video imagery and said directional information. Thus, based on the designation of the main user 104, the direction towards the main user in the video imagery may be determined. For example, the main user 104 may be present in the video imagery data at the centre of the video captured by the front facing camera 103. The apparatus 100 can then use this direction to determine audio that was captured from a corresponding direction. Thus, audio that was captured from the same direction that the front facing camera is facing may be determined to be the main user audio.

In other examples, if the main user is the closest person then the main user audio may be determined as being the audio from a particular direction that also has the least reverberation or the greatest loudness. Accordingly, the main user audio may be determined without reference to the video imagery and instead may use predetermined audio criteria related to loudness and reverberation to identify the main user. It will be appreciated that there may be one or more instance of main user audio.

The apparatus 100 may determine other user audio of the at least one other user from the spatial audio data using a direction to the identified at least one other user determined from the video imagery and said directional information. Thus, based on the designation of the other - users 105, 106, the directions towards the other users in the video imagery may be determined.

The apparatus 100 can then use these directions to determine audio of the spatial audio data that was captured from a corresponding direction. Thus, audio that was captured from the same direction as the other user is present in the video imagery may be determined to be the other user audio. It will be appreciated that there may be one or more instance of other user audio. As with the main user audio, in one or more examples, the other user audio may be determined without reference to the video imagery and instead may use predetermined audio criteria related to loudness and reverberation to identify the one or more other users. It will be appreciated that there may be one or more instance of other user audio.

The apparatus 100 may now provide for advantageous presentation of the main user audio and other user audio at the second device 111 (if we assume a two-way communication scenario) or both the second and third device 111, 121 (if we assume a three-way communication scenario). It will be appreciated that more than three parties may be involved in some examples.

In the examples that follow various combinations of audio-modifying effects, which may comprise voice changing effects, and avatars will be described that may provide for one or more of improved understanding or representation of the other persons around the main user 104, better intelligibility of the audio of the main user 104, reduced disruption due to potentially numerous different voices being audible in the audio presented at whichever device is remote to the one capturing the video and audio, and better discerning of which device presented audio originates from. This may provide advantages for communication of user generated content conveyed either live, such as by video call, or recorded via video messaging services.

In one or more examples, the apparatus is configured to select at least one of the main user(s) 104 and the other user(s) 105, 106 for application of an avatar and configured to select at least one of the main user(s) 104 and the other user(s) 105, 106 for application of an audio-modifying effect to the audio of the selected users.

Thus, in one or more examples,
the apparatus may provide signalling to provide for presentation at the second device 111 of the main user audio and the other user audio, wherein at least one of the main user audio and the other user audio is provided for presentation with the audio-modifying effect, which may comprise a voice changer or other audio-modifying effect that may or may not be responsive to detected speech; and
the apparatus 100 is configured to determine an avatar for representing at least the face of at least one of the main user(s) and/or the other user(s) based on at least one of predetermined data and a user input; and
provide signalling to provide for display, at the second device 111, of the avatar to represent the at least one of the main user(s) or the other user(s) (e.g. rather than video imagery of the selected user); and
wherein the audio-modifying effect has a predetermined association with the avatar.

The association between the avatar and the audio-modifying effect may provide for improved understanding of the audio and the presence of the other users.

In one or more examples, the association comprises the audio-modifying effect sounding like the thing depicted by the avatar. For example, the avatar may represent a thing that is known to have a characteristic sound and the audio-modifying effect is configured to apply the characteristic sound to the at least one of the main user audio and the other user audio.

Thus, in one or more examples at least one of:
the avatar comprises an animal and the audio-modifying effect is configured to modify the audio to sound like or have the characteristics of the sound that animal makes;
the avatar comprises a robot and the audio-modifying effect is configured to modify the audio to sound like or have the characteristics of a robot;
the avatar comprises a cartoon character and the audio-modifying effect is configured to modify the audio to sound like or have the characteristics of the sound that cartoon character makes;
the avatar comprises a celebrity and the audio-modifying effect is configured to modify the audio to sound like or have the characteristics of the sound of that celebrity; and
the avatar comprises an alien and the audio-modifying effect is configured to modify the audio to sound like or have the characteristics of the sound expected of an alien.

As examples of the above, the avatar may comprise a pig and the audio-modifying effect may modify the audio to one or more oinks or to modify the voice of the user to make it sound like the user is snorting while speaking. The avatar may comprise a chicken and the audio-modifying effect may modify the audio to one or more clucks or to modify the voice of the user to make it sound like the user is clucking while speaking. The avatar may comprise a frog and the audio-modifying effect may modify the audio to one or more ribbits or to modify the voice of the user to make it sound like the user is croaking while speaking. The avatar may comprise a sheep and the audio-modifying effect may modify the audio to one or more baas or to modify the voice of the user to make it sound like the user is bleating while speaking. Thus, for animal-based avatars a sound of the animal may be mixed or interspersed with the voice of the user.

The avatar may comprise an alien and the audio-modifying effect may modify the audio to one or more bloop or bleep or alien-like sounds or to modify the voice of the user to introduce a wobbling of the frequency of or reverberation of the user's voice while speaking. The avatar may comprise a robot and the audio-modifying effect may modify the audio to one or more bleep sounds or to modify the voice of the user to introduce a higher pitch and/or metallic effect to the user's voice while speaking. The audio-modifying effect, in summary, may provide for an effect to be applied that a receiving user will link to the associated avatar over any other avatar provided for display at the second device 111.

The audio-modifying effect may be responsive to speech and may provide, when applied to speech, an audible sound when the selected user is speaking but not when the selected user is not speaking, except for any continuation of the effect, such as an echo, after the selected user has stopped speaking. In other examples, the audio-modifying effect may be responsive to an average audio level rather than speech and provide synthetic sound effects based on the average audio level.

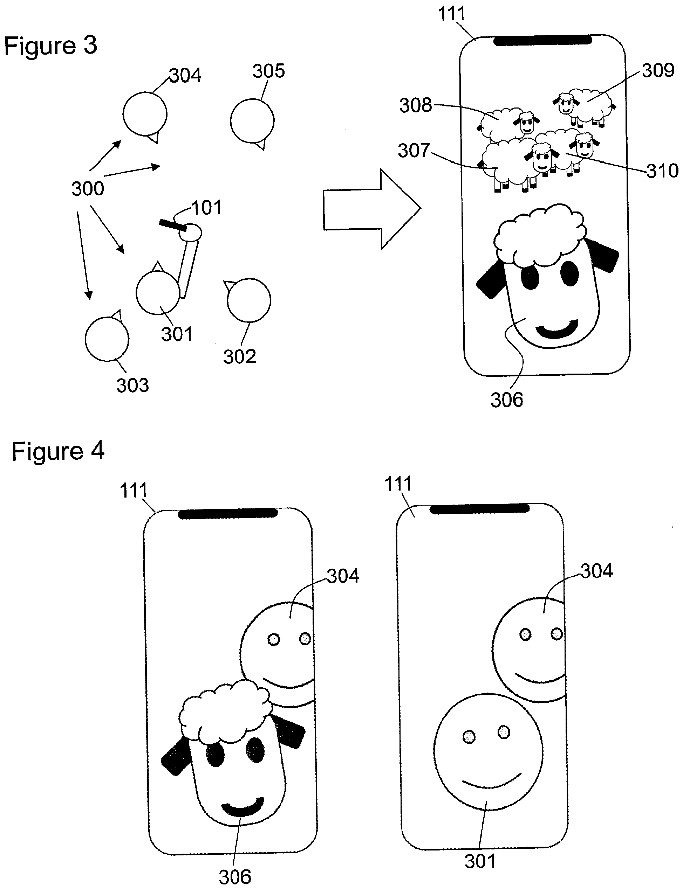

Example Figure 3 shows a first use case for the apparatus 100. This use case comprises telecommunication between the first device 101 and the second device 111. The telecommunication may include the third device 121 or additional devices but they are not necessary to explain the functionality provided by the apparatus 100.

A plurality of persons 300 are shown gathered around the first device 101. The user 301 is shown holding the first device 101 outstretched in their arm such that they may be captured by one of the cameras 103 of the first device 101.

In one or more examples, the main user 301 may be in a bar with other users 302-305. The user 301 may wish to convey the understanding that they are in a busy and potentially noisy environment with their friends but does not want any speech or shouting of the friends to be audible to a remote user of the second device 111 receiving the telecommunication call.

Video imagery data captured by the first device 101 may thus capture the user 301 and their friends because the video imagery data may be obtained from one or more cameras 103, 203 that have a wide field of view of the space surrounding the first device 101. For example, the video imagery data may be captured by both a front facing camera 103 and a rear facing camera 203.

The apparatus may therefore receive video imagery data from the cameras and spatial audio data from the microphones of the first device 101. The apparatus 100 may determine the user 301 to be the main user 104 and the other users 302-305 as other users, similar to other users 105, 106 in Figure 1, based on any of the techniques described above.

The main user 301 may activate an avatar-plus-audio-modifying effect mode to initiate use of avatars based on the video imagery data and audio-modifying effects for application to the spatial audio data. Example Figure 3 also shows what the apparatus 100 (or apparatus 100 and apparatus 110) causes to be presented at the second device 111.

The apparatus 100 causes the presentation of a first avatar 306 representing the main user 301. The first avatar may be animated to provide facial expressions corresponding to facial expressions of the main user 301 determined from the video imagery data.

The apparatus 100 causes the presentation of a plurality of second avatar 307-310 representing and corresponding to each of the plurality of other users 302-305. The second avatars may or may not be animated to provide facial expressions corresponding to facial expressions of the other users 302-305 determined from the video imagery data. In one or more other examples, the second avatars or any avatar representing the other users may be representative of the number of other users. In one or more examples, the first avatar and the second avatar may be the same or related by a predetermined association. Thus, the first and second avatars may depict the same object but in different ways. For example, the first avatar depicts the face of a sheep while the second avatar depicts the face and body of a sheep (or any other animal or thing). In other examples, the first and second avatar may be related more conceptually and for example, the first avatar may comprise a sheep dog and the second avatar may comprise a sheep.

In terms of the application of audio-modifying effects, a second audio modifying effect that converts any speech present in the other user audio to sheep baas may be used. Thus, the second audio modifying effect is associated with the second avatar by virtue of them looking like and resulting in a sound like a sheep. The apparatus 100 may use a database of avatars and associated audio-modifying effects. A first audio-modifying effect may or may not be applied to the main user audio. The first audio-modifying effect may be associated with the first avatar and may comprise a voice changer such that the speech in the main user audio remains intelligible but modifies the speech to include bleating.

Thus, for a remote user, such as user 114, the second device 111 may be instructed to present the avatars 307-310 of the other users and thus they will understand that the main user 301 is with a group of other users 302-305. However, as the speech of the other user audio is made unintelligible by the second audio modifying effect, they are not burdened by trying to understand the speech of the main user 301 over the speech of the other users. Further, given the presence of the baaing provided by the second audio-modifying effect they can appreciate that the other users are talking/shouting in the background and thus not only are other persons present but they are making noise by talking/shouting. The use of the second audio modifying effect to make the speech of the other user's unintelligible may have further advantages as the human auditory system may be better able to focus on the voice of the main user over unintelligible bleating than intelligible voices of the main user's friends. Accordingly, the use of the avatars and audio-modifying effects has conveyed information about the presence of persons in the main user's environment and has potentially improved the intelligibility of the voice in the main user audio. Further, in addition to these technical effects the avatars and audio-modifying effects may provide for an entertaining telecommunication call.

Example Figure 4 shows two different versions of what the apparatus 100 may cause to be presented at the second device 111. On the left-hand side example of Figure 4, the first avatar 306 is used to represent the main user 301. The second avatar is not applied to the other users and instead video imagery of the other users is provided for display at the second device 111 extracted from the video imagery data. The second-audio-modifying effect may however be applied to the other user audio and make the other user audio sound like sheep bleating. Accordingly, the apparatus 100 has provided for the display of at least one avatar to represent one of the main user(s) and other user(s) and provided for presentation of at least one of the main user audio and other user audio with an audio-modifying effect that corresponds to said avatar, such as by a predetermined association. In the right-hand side example of Figure 4 the main user 104 has requested the apparatus 100 to remove the first avatar and the apparatus 100 has provided for sending of video imagery of the main user 301 extracted from the video imagery data rather than the first avatar 306.

In one or more examples, the capture of the video imagery data using two or more cameras may provide a field of view of the space surrounding the main user greater than can easily be displayed on a display having a limited size, such as the display of the second device 111. While in some embodiments the second device may comprise a virtual reality headset such that the remote user 114 could look around and be presented with the entire field of view based on their head movements, in other examples, the display capabilities of the second device 111 may prevent this. Thus, in one or more examples, the video imagery data may comprise video imagery captured by two or more cameras, wherein the cameras are configured to capture a field of view that extends over different parts of a space around the main user, and the apparatus is configured to determine the one or more other users in the video imagery data and, irrespective of their spatial distribution in the video imagery data, provide for display at the second device 111 of video imagery of the other users or avatars representative of the other users grouped together with, or behind, video imagery of or a first avatar representative of the main user 104. This is advantageous as the apparatus 100 is able to identify other users over a wide field of view but provide for the convenient presentation of them at the second device using a display having an aspect different to or a spatial extent smaller than the field of view provided in the video imagery data.

The avatars described herein may be selected from a plurality of avatars. The avatar may be applied based on predetermined preference of the user or based on a user selection, such as at the time of making the video call or video message or during the video call. In one or more other examples, the avatar may be selected by the apparatus 100 based on one or more predetermined rules that may apply to the frequency or volume content of the spatial audio data or content of the video imagery data. For example, if the apparatus detects many low-pitched voices it may apply a bear avatar with a bear-like low-pitched growling audio-modifying effect. Alternatively, if the apparatus 100 detects that the video imagery is taken at night time, it may select a nocturnal animal avatar such as an owl avatar with an owl-like howling audio-modifying effect.

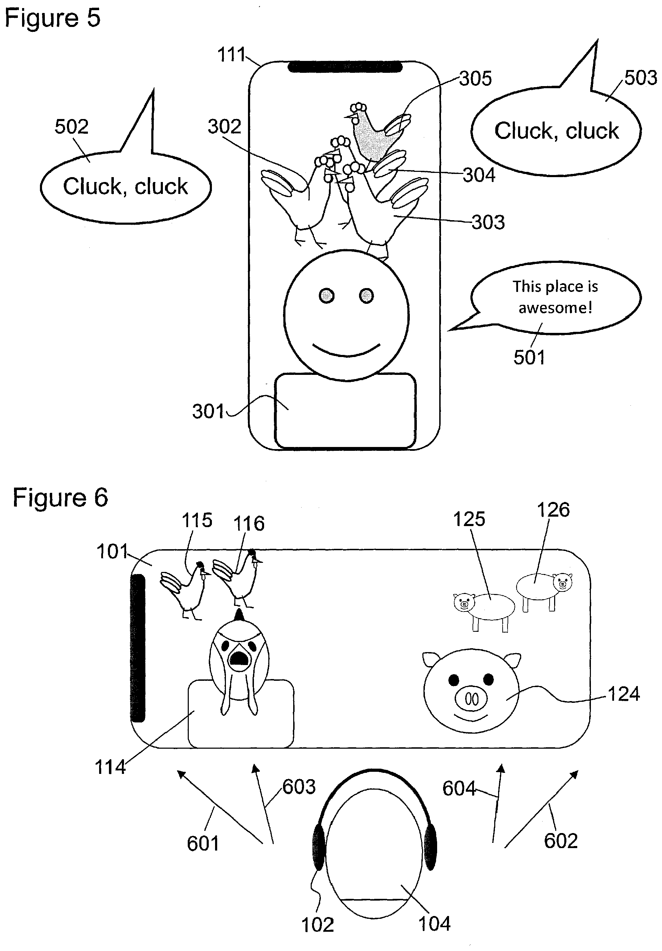

Example Figure 5 shows a further example of what the apparatus 100 may cause to be presented at the second device 111. In example Figure 5, the apparatus 100 has provided signalling to cause the presentation at the second device 111 of video imagery of the main user 301 and a plurality of second avatars to represent the other users 302-305. Further, the second audio-modifying effect is applied to the other user audio for presentation at the second device 111. The first audio-modifying effect is not applied to the main user audio. Thus, the main user audio is audible as speech 501 "This place is awesome!" while the other user audio is modified to a series of "clucks" 502, 503. In example Figure 5, the apparatus 100 (or apparatus 100 in combination with the apparatus 200 of the second device 111, as in any of the examples herein) provides for presentation of the other user audio with a spatial audio effect and the presentation of the main user audio with a spatial audio effect.

Accordingly, the spatial audio effect may be applied such that the main user audio is to be perceived from a first-perceived direction, which may comprise a straight-ahead direction. Thus, the straight-ahead direction may correspond to where the remote user 114 of the second device holds the second device 111 and therefore sees the main user 301.

The spatial audio effect for the other user audio may be applied such that the other user audio is to be perceived from a second-perceived direction different to the first-perceived direction. The second-perceived direction may be a direction upward of the first-perceived direction, similar to the relative positions of the video imagery/avatars that represent the main user 301 and other users 302-305. In other examples, the second-perceived direction may comprise a wider direction than the first-perceived direction. In one or more examples, the second-perceived direction may comprise a plurality of directions based on the directions the other users were present when the spatial audio data was captured. Thus, the other user audio may be presented with a spatial audio effect that groups the directions from which the audio is perceived irrespective of the direction from which the spatial audio of the other users is captured or, alternatively, reproduces the directions from which the spatial audio of the other users is captured.

The spatial audio effect may be applied such that the other user audio may be perceived from at least one of:
- from a position corresponding to the depiction of the other user(s) on the screen,
- from position(s) corresponding to the relative original positions of the other users as captured in the spatial audio data, and
- from a virtual position based on both of the position of the depiction of the other user on the screen and the position of the other users as captured.

The use of the spatial audio effect may be configured to present both directional audio mixed with diffusely presented audio (without a perceived direction). Thus, the other user audio may be presented such that there is at least one directional component and diffuse sound for the other user audio. As an example, the balance between presenting the audio with a spatial audio effect such that the perceived-directions correspond to the position of the depiction of the associated user on the screen and diffuse playback is controlled based on the extent (range of direction of arrival values in the directional information) of the original sound sources. For example, if there are two sheep avatar in the background and these correspond to user sound sources that are spatially far apart (e.g., one to the left, one to the right), the playback is dominantly diffuse. If they are close, the playback is dominantly directional. Thus, the "strength" of the spatial audio effect may be controlled based on positions of the other users relative to one another during capture of their audio.

In one or more examples, the balance between presenting the audio with a spatial audio effect such that the perceived-directions correspond to the position of the depiction of the associated user on the screen and diffuse playback is controlled based on the visual behavior of the avatars. For example, in some embodiments, the avatars may wander around in the background based on pseudo-random or rule-based constraints. If the avatar group becomes very tight, the spatial audio effect may be configured to be more directional. On the other hand, if the group scatters around the screen, the spatial audio effect may be changed to be more diffuse. This provides the user a link between the visual imagery and the audio information.

Example Figure 6 shows an example including three groups of main and other users, such as depicted in example Figure 1. The first group are captured by the first device 101 and first apparatus 100, the second group are captured by the second device 111 and second apparatus 110 and the third group are captured by the third device 121 and the third apparatus 120. It will be appreciated that in some instances one or more of the groups may only have a main user present and, accordingly, references to the main users of the second and third devices may be read as simply a user.

Figure 6 shows an example presentation provided by the apparatus 100 (such as in combination with the other apparatuses 110, 120) using the display and audio presentation device 102 of the first device 101. However, it will be appreciated that the description that follows could be applied to any of the devices 101, 111, 121. In particular, the apparatuses 100, 110, 120 that are in communication with the other of the devices 101, 111, 121 could perform this functionality or any of the apparatuses 100, 110, 120 alone or in combination.

The main user 104 is shown wearing headphones representative of the audio presentation device 102 and looking at a display of the first device 101.

The apparatus 100 may be engaged in a group video call, also known as a teleconference. The apparatus 100 may thus be configured to:
receive main user audio from the second device 111 for presentation by the first device 101 with a third audio-modifying effect comprising a voice changer, wherein the main user audio is captured by the second device 111; and
receive main user audio from the third device 121 for presentation by the first device 101 with a fourth audio-modifying effect, different to the third audio-modifying effect, and comprising a voice changer, wherein the main user audio is captured by the third device; and
provide for said presentation by the first device 101 of the main user audio from both the second device 111 and the third device 121.

This may be advantageous as the third and fourth audio-modifying effect may help the user of the first device 101 distinguish who is talking. For examples, the main users of the second and third devices 111, 121 may have similar voices or voices that the main user 104 may have difficult discerning and therefore the audio-modifying effect helps to distinguish who is speaking during the teleconference.

The main user audio may be received by the apparatus 100 from the second and third devices 111, 121 unmodified with instructions to apply the respective third audio-modifying effect and fourth audio-modifying effect. Accordingly, the apparatus 100 or first device 101 may apply the audio-modifying effects. In one or more examples, the main user audio may be received by the apparatus 100 from the second and third devices 111, 121 with the respective third audio-modifying effect and fourth audio-modifying effect applied thereto. Thus, the second and third devices 111, 121 or second and third apparatuses 110, 120 may have applied the audio-modifying effects.

The main user audio may be for presentation with a spatial audio effect such that the main user audio from the second device is to be perceived from a third-perceived direction 601. Likewise, the main user audio may be for presentation with a spatial audio effect such that the main user audio from the third device is to be perceived from a fourth-perceived direction 602 different to the third-perceived direction 601. It will be appreciated that the third-perceived and fourth perceived labels for the directions 601 and 602 have been chosen solely to distinguish them from the first-perceived and second-perceived directions described earlier in relation to figure 5, rather than to imply that a specific number of perceived directions should be presented. Thus, the spatial audio effect additionally helps to distinguish the voices of the main users

Example Figure 6 also uses third and fourth avatars to represent the remote users 114, 124 of the second and third devices 111, 121 respectively. Thus, the apparatus 100 may be configured to receive third avatar information from the second device 111 for visual presentation by the first device 101, the third avatar information representative of a third avatar, comprising a chicken in this example, for representing at least the face of the remote user 114 of the second device. It will be appreciated the aforementioned main user audio from the second device is the audio attributed to the main user of the second device, e.g. their voice, which may or may not be separated from audio captured by the second device as described above in relation to the first device.

The apparatus 100 may be configured to receive fourth avatar information from the third device 121 for visual presentation by the first device 101, the fourth avatar information representative of a fourth avatar, comprising a pig in this example, for representing at least the face of a main user of the third device 121. It will be appreciated the aforementioned main user audio from the third device is the audio attributed to the main user of the third device, e.g. their voice, which may or may not be separated from audio captured by the third device as described above in relation to the first device.

It will be appreciated that the use of "first", "second", "third" and "fourth" and so on is to clearly distinguish between the effects and avatars rather than to specify the number of effects and avatars that are in use at any one time.

The avatar information, and any other avatar information in any other examples, may comprise imagery, such as streamed video imagery, or a three-dimensional model of the avatar, such as a controllable three-dimensional model that can be controlled to show facial expressions, or a reference to a source from which to acquire the information required to present the avatar.

The apparatus 100 may instruct the first device 101 to present the third avatar, for representing the remote user 114 and the fourth avatar, for representing the remote user 124 at different locations on a display of the first device 101, shown on the left-hand and right-hand sides in example figure 6.

The third audio-modifying effect may be pre-associated with the third avatar, similar to the examples above, listing among others animal-based avatars and audio-modifying effects that sound like that animal. Similarly, the fourth audio-modifying effect may be associated with the fourth avatar.

The third or fourth audio-modifying effect may be associated with the respective third or fourth avatar respectively in terms of a predetermined association, such as predetermined links between avatars and audio-modifying effects stored in a reference list or database. As exemplified above, the audio-modifying effect and avatar may comprise combinations of animals, cartoon characters, aliens, robots, famous celebrities and the sounds that are characteristic thereof.

This may be advantageous as the main user 104 will see a chicken avatar and will be able to readily associate the chicken-like sounding audio to the user of the second device 111. Likewise, the main user 104 will see a pig avatar and will be able to readily associate the pig-like sounding audio to the user of the third device 121. The use of avatars and pre-associated audio-modifying effects that cause the audio to sound like the thing depicted by the avatar is technically advantageous for understanding group calls and the like.

It will be appreciated that other user audio and associated avatars may be provided for presentation. Example Figure 6 shows the other users 115, 116 of the second device 111 depicted as fifth avatars comprising chickens. Example Figure 6 shows the other users 125, 126 of the third device 121 depicted as sixth avatars comprising pigs. Avatars may or may not be used to represent the other users 115, 116, 125, 126. The apparatus may receive fifth avatar information from the second device for visual presentation by the first device, the fifth avatar information representative of a fifth avatar for representing the at least one other user of the second device. Accordingly, the apparatus 100 may receive sixth avatar information from the third device 121 for visual presentation by the first device, the sixth avatar information representative of a sixth avatar for representing the at least one other user of the third device.

In one or more examples, the fifth avatar may have the same appearance as the third avatar. In other examples, the fifth avatar may depict the same thing as the third avatar but represented differently. In this example, the third avatar is a chicken's head presented front-on while the fifth avatar is the whole chicken in profile. In one or more examples, the fifth avatar may be conceptually related to the third avatar. For example, the third avatar may comprise a sheep dog and the fifth avatar may comprise sheep. The same considerations apply for the fourth and sixth avatars. In other examples, the third and fifth avatars and fourth and sixth avatars do not represent the same thing.

In this and other examples, the apparatus 100 may be configured to receive other user audio from the second device for presentation by the first device with a fifth audio-modifying effect wherein the other user audio is captured by the second device 111. The apparatus 100 may be configured to receive other user audio from the third device 121 for presentation by the first device 101 with a sixth audio-modifying effect wherein the other user audio is captured by the third device 121. Thus, the apparatus 100 or first device 101 under the control of the apparatus 100 may provide for said presentation by the first device of the other user audio from both the second device and the third device.

In this and other examples, the fifth audio-modifying effect applied to the other user audio from the second device 111 is associated with one of the third audio-modifying effect applied to the main user audio from the second device or the fifth avatar. Accordingly, the fifth audio-modifying effect and the third audio-modifying effect may make the audio sound like the same thing.

In this and other examples, the sixth audio-modifying effect applied to the other user audio from the third device 121 is associated with one of the fourth audio-modifying effect applied to the main user audio from the third device or the sixth avatar.

In one or more other examples, the third and fourth avatars may not be used and video imagery of the main users may be presented instead and the fifth and sixth avatars are used to represent the other users.

The fifth audio-modifying effect, which may be associated with either the third avatar or the fifth avatar (depending on which avatars are used), may advantageously assist the main user 104 to understand from which device 111, 121 the other user audio is originating. Likewise, the sixth audio-modifying effect, which may be associated with either the fourth avatar or the sixth avatar (depending on which avatars are used), may advantageously assist the main user 104 to understand from which device 111, 121 the other user audio is originating. Thus, the use of avatar/audio-modifying effect combinations may make the group call easier to understand and may also have an entertainment value.

The other user audio from the second and third devices may be configured to be presented with a spatial audio effect such that the respective audio is to be perceived as originating from different directions. This may also provide for advantageous presentation that conveys better understanding for the main user 104. Thus, the other user audio from the second device 111 and the other user audio from the third device 121 may be provided for presentation with a spatial audio effect such that the other user audio is to be perceived from a fifth-perceived direction 603 and sixth-perceived direction 604 respectively, the fifth-perceived direction 603 within a threshold angular separation of the third-perceived direction 601 and the sixth-perceived direction 604 within a threshold angular separation of the fourth perceived-direction 602. It will be appreciated that the fifth-perceived and sixth-perceived labels for the directions 603 and 604 have been chosen solely to distinguish them from the first-perceived, second-perceived, third-perceived and fourth-perceived directions described earlier, rather than to imply that a specific number of perceived directions should be presented. Thus, the first and third perceived directions 601, 603 may be restricted to being close to one another to help the main user 104 is appreciate that the audio is from the same second device 111. The second and fourth perceived directions 602, 604 may be restricted to being close to one another to help the main user 104 is appreciate that the audio is from the same third device 121. The threshold angular separation may be less than 30 degrees, 20 degrees, 10 degrees or some other amount.

In one or more examples, similar to as described above, the audio received from the second and third devices represents the audio of a plurality of users captured by each of the second and third devices 111, 121, wherein the audio captured thereby is separated into said main user audio comprising the audio from at least one of the plurality of users captured by the second and third devices, and the other user audio comprising the audio from any other users of the plurality of users captured by the second and third devices. It will be appreciated that the second and third devices or apparatuses 110, 120 thereof may use similar main-user-identifying criteria and other-user-identifying criteria to identify the users and separate the main user audio and the other user audio from spatial audio data captured by the devices.

In this and other examples, the main and other users may be distributed in the space around the second and third devices 111, 121. However, depictions of the main and other users, either as video imagery or an avatar, may be grouped together to fit within a region of the display of the first device (e.g. the left-hand side or right-hand side or top and bottom) irrespective of the relative distribution of those users. Thus, the grouping of the one or more other users and/or the grouping of the one or more main users may efficiently convey the understanding of the plurality of persons present around the second and third devices to the user of the first device, while compensating for the spatial extent or aspect of the display of the first device 101.

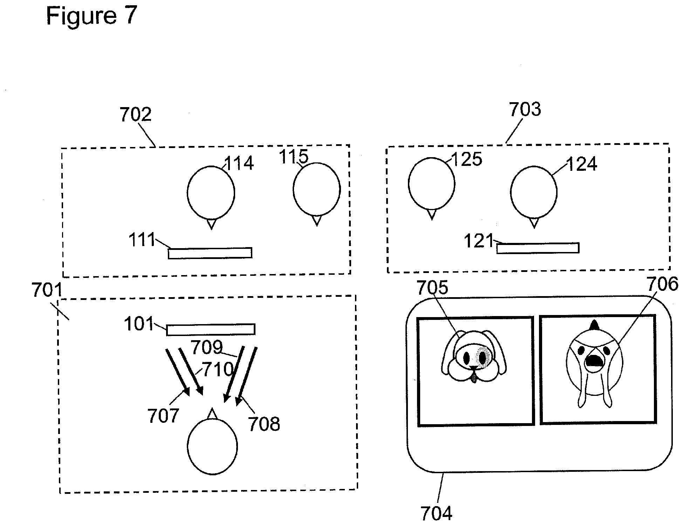

Example Figure 7 shows a further example in which avatars for the main users are used and the other users are not depicted, neither as an avatar nor by video imagery. However, in other examples, the other users may be depicted.

Figure 7 shows the first device 101 in a first location 701, the second device 111 in a second location 702 and the third device 121 in a third location 703. In the second location 702 there is a remote user 114 and one other user 115 to the right of the remote user 114 from the point of view of the second device 111. In the third location there is a remote user 124 and one other user 125 to the left of the remote user 124 from the point of view of the third device 121.

Figure 7 also shows the display 704 of the first device 101 upon which the apparatus 100 is configured to provide for display of a third avatar 705 for representing the remote user 114 of the second device 111 and a fourth avatar 706 for representing the remote user 124 of the third device 121. The third avatar comprises a dog and the second avatar comprises a chicken, which may be animated live to represent facial expressions of the respective users, as explained above.

The main user audio from the second device is presented with a spatial audio effect such that the main user audio is heard from a third-perceived direction 707. The third perceived direction may be substantially aligned with the position the third avatar 705 is presented on the display.

The main user audio from the third device is presented with a spatial audio effect such that the main user audio is heard from a fourth-perceived direction 708. The fourth-perceived direction may be substantially aligned with the position the fourth avatar 706 is presented on the display 704.

The spatial audio effect may be used to convey the position of the other users 115, 125 relative to their remote users 114, 124. Thus, the apparatus may be configured to receive information indicative of the direction from which the other user audio should be perceived based on the location of the other user relative to the main user determined by the second and/or third device. Accordingly, the other user audio may be presented with a spatial audio effect that applies said direction and therefore presents the other user audio with the spatial audio effect to be perceived from said direction. The other user audio may be provided to the first device 101 with the spatial audio effect applied. In other examples, the other user audio may be provided with signalling indicative of the direction and the apparatus 100 may apply the spatial audio effect to the other user audio.

Thus, the other user audio from the second device 111 is presented with a spatial audio effect such that the other user audio is to be perceived to originate from a fifth-perceived direction 709. The fifth-perceived direction may be substantially to the right of the third-perceived direction 707 reflecting the other user 115 being to the right of the remote user 114.

The other user audio from the third device 121 is presented with a spatial audio effect such that the other user audio is to be perceived to originate from a sixth-perceived direction 710. The sixth-perceived direction may be substantially to the left of the fourth-perceived direction 708 reflecting the other user 125 being to the left of the main user 124.

Thus, in one or more examples, the spatial audio effect may be provided to present the main user audio and other user audio from a particular device with perceived directions from which the audio is to be perceived having a relative arrangement that corresponds to the relative arrangement of the main and other users.

The use of audio modifying effects that sound like the avatar used for the main user (or other users) may assist in helping the listener to understand which main user the other user audio is associated with despite being heard from a direction in line with the other of the main users, as shown in Figure 7. Thus, in general, the apparatus 100 providing for presentation using a combination of audio modifying effects that sound like the avatar used for the main/other users captured by a particular device to indicate from where the audio originates and spatial audio effects that provide different perceived directions to distinguish between multiple users at the same location is particularly advantageous.

In one or more examples, the groups of other users, such as those depicted as avatars as shown in example figure 6, may be provided for display intermingled with the other users from the other call participants. Thus, although the depictions of the other users may be grouped to fit within the display of the first device 101, the regions of the display used for their presentation may overlap.

In a further example, the second and third devices 111, 121 may be co-located, such as in the same room, and wherein the video imagery data and spatial audio data captured by each of the devices includes imagery of at least one person who is common to both or audio from at least one person who is common to both. In one or more examples, the video imagery data and spatial audio data may be treated as one and a main user/other user may be determined from both sources of the video imagery data using main-user-identifying criteria and other-user-identifying criteria.

In one or more other examples, the apparatus may be configured to determine a main user in each of the video imagery data/spatial audio data received from the co-located devices but receive other user audio from only one of at least two co-located devices. This may save bandwidth and it may be presumed that the other user audio may be adequately captured by one of the co-located devices.

In one or more other examples, the other users determined from the aforementioned data from the co-located devices may be grouped either to a first group associated with a main user of a first of the co-located devices and a second group associated with a main user of the second of the co-located devices. The groupings may be made based on the proximity of the other users to the respective main user, although other criteria may be used. Different avatars may be used to depict the first group of other users compared to the avatars used to depict the second group of other users. In one or more examples, as the other users move about the space they may be reassigned to a different one of the first and second group. Accordingly, the apparatus may provide for updating of the number of the particular avatars represented at the device remote from the co-located devices based on the regrouping of the other users.

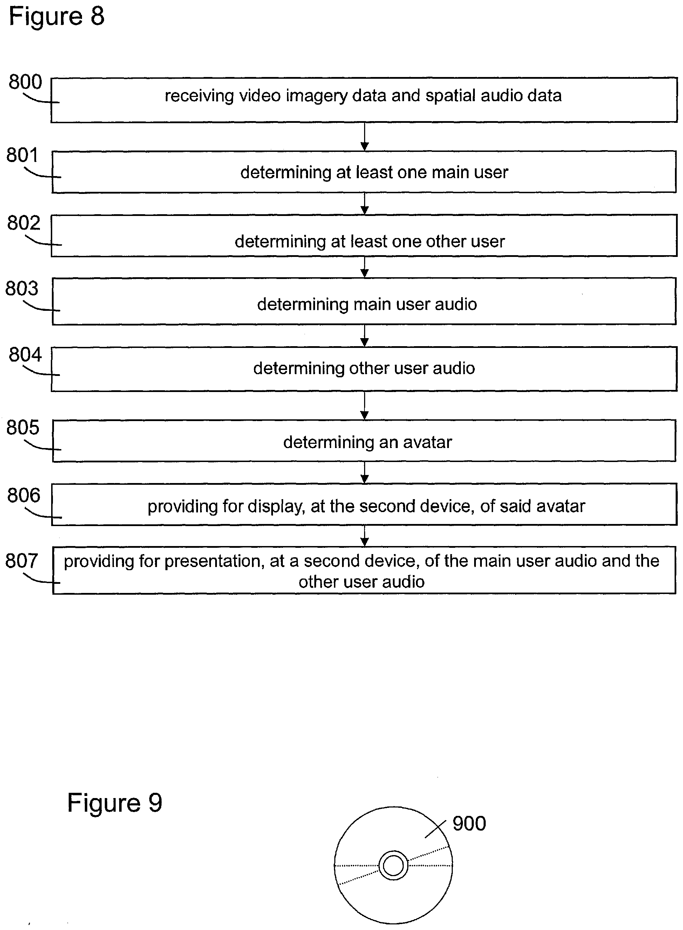

Figure 8 shows a flow diagram illustrating the steps of,
receiving 800 video imagery data and spatial audio data captured by a first device, the spatial audio data comprising audio and directional information indicative of the direction from which the audio was captured;
determining 801 at least one main user in said video imagery based on main-user-identifying criteria;
determining 802 at least one other user in said video imagery based at least on other-user-identifying criteria;
determining 803 main user audio of the at least one main user from the spatial audio data using a direction to the determined at least one main user and said directional information;
determining 804 other user audio of the at least one other user from the spatial audio data using a direction to the determined at least one other user and said directional information;
determining 805 an avatar for representing the at least one main user or the at least one other users based on at least one of predetermined data and a user input;
providing 806 for display, at the second device, of said avatar; and
providing 807 for presentation, at a second device, of the main user audio and the other user audio, wherein at least one of the main user audio and the other user audio is provided for presentation with an audio-modifying effect, wherein the audio-modifying effect is pre-associated with said determined avatar.

Figure 9 illustrates schematically a computer/processor readable medium 900 providing a program according to an example. In this example, the computer/processor readable medium is a disc such as a digital versatile disc (DVD) or a compact disc (CD). In some examples, the computer readable medium may be any medium that has been programmed in such a way as to carry out an inventive function. The computer program code may be distributed between the multiple memories of the same type, or multiple memories of a different type, such as ROM, RAM, flash, hard disk, solid state, etc.

User inputs may be gestures which comprise one or more of a tap, a swipe, a slide, a press, a hold, a rotate gesture, a static hover gesture proximal to the user interface of the device, a moving hover gesture proximal to the device, bending at least part of the device, squeezing at least part of the device, a multi-finger gesture, tilting the device, or flipping a control device. Further the gestures may be any free space user gesture using the user's body, such as their arms, or a stylus or other element suitable for performing free space user gestures.

The apparatus shown in the above examples may be a portable electronic device, a laptop computer, a mobile phone, a Smartphone, a tablet computer, a personal digital assistant, a digital camera, a smartwatch, smart eyewear, a pen based computer, a non-portable electronic device, a desktop computer, a monitor, a smart TV, a server, a wearable apparatus, a virtual reality apparatus, or a module/circuitry for one or more of the same.

Any mentioned apparatus and/or other features of particular mentioned apparatus may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/ functional units.

In some examples, a particular mentioned apparatus may be pre-programmed with the appropriate software to carry out desired operations, and wherein the appropriate software can be enabled for use by a user downloading a "key", for example, to unlock/enable the software and its associated functionality. Advantages associated with such examples can include a reduced requirement to download data when further functionality is required for a device, and this can be useful in examples where a device is perceived to have sufficient capacity to store such pre-programmed software for functionality that may not be enabled by a user.

Any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

Any "computer" described herein can comprise a collection of one or more individual processors/processing elements that may or may not be located on the same circuit board, or the same region/position of a circuit board or even the same device. In some examples one or more of any mentioned processors may be distributed over a plurality of devices. The same or different processor/processing elements may perform one or more functions described herein.

The term "signalling" may refer to one or more signals transmitted as a series of transmitted and/or received electrical/optical signals. The series of signals may comprise one, two, three, four or even more individual signal components or distinct signals to make up said signalling. Some or all of these individual signals may be transmitted/received by wireless or wired communication simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/examples may consist of any such individual feature or combination of features. In view of the foregoing description it will be evident to a person skilled in the art that various modifications may be made within the scope of the disclosure.

While there have been shown and described and pointed out fundamental novel features as applied to examples thereof, it will be understood that various omissions and substitutions and changes in the form and details of the devices and methods described may be made by those skilled in the art without departing from the scope of the disclosure. For example, it is expressly intended that all combinations of those elements and/or method steps which perform substantially the same function in substantially the same way to achieve the same results are within the scope of the disclosure. Moreover, it should be recognized that structures and/or elements and/or method steps shown and/or described in connection with any disclosed form or examples may be incorporated in any other disclosed or described or suggested form or example as a general matter of design choice. Furthermore, in the claims means-plus-function clauses are intended to cover the structures described herein as performing the recited function and not only structural equivalents, but also equivalent structures. Thus, although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. An apparatus comprising means configured to:
receive video imagery data and spatial audio data captured by a first device, the spatial audio data comprising audio and directional information indicative of the direction from which the audio was captured;
determine at least one main user in said video imagery based on main-user-identifying criteria;
determine at least one other user in said video imagery based at least on other-user-identifying criteria;
determine main user audio of the at least one main user from the spatial audio data using a direction to the determined at least one main user and said directional information;
determine other user audio of the at least one other user from the spatial audio data using a direction to the determined at least one other user and said directional information;
determine an avatar for representing the at least one main user or the at least one other user based on at least one of predetermined data and a user input;
provide for display, at the second device, of said avatar; and
provide for presentation, at a second device, of the main user audio and the other user audio, wherein at least one of the main user audio and the other user audio is provided for presentation with an audio-modifying effect, wherein the audio-modifying effect is pre-associated with said determined avatar.

2. An apparatus according to claim 1, wherein
said avatar comprises a first avatar configured to represent at least the face of the at least one main users; and
wherein the first avatar is animated to provide facial expressions corresponding to facial expressions of the main user determined from the video imagery data.

3. An apparatus according to claim 2, wherein the means are configured to:
determine a second avatar for representing the at least one other user based on at least one of the first avatar, predetermined data or a user input;
provide for display, at the second device, of the second avatar.

4. An apparatus according to any preceding claim, wherein the video imagery data comprises video imagery simultaneously captured by two or more cameras of the first device, the cameras configured to capture different parts of a space around the first device; and
wherein the avatar comprises a second avatar to represent the at least one other user, and wherein the or each second avatar is provided for display, at the second device, in a group within the spatial extent of a display of the second device and to appear behind or with video imagery of the main user or a first avatar that represents the main user irrespective of the relative locations of the or each other user in the video imagery data.

5. An apparatus according to any preceding claims, wherein
the main user audio is provided for presentation at the second device either with a first audio-modifying effect or without an audio modifying effect; and
the other user audio is provided for presentation at the second device with a second audio-modifying effect, the second audio-modifying effect configured to make any voices in the other user audio presented incomprehensible.

6. An apparatus according to any preceding claim, wherein main-user-identifying criteria comprises one or more of:
identifying the main user using facial recognition and predetermined facial recognition data;
identifying the main user as the user closest to the first device in the video imagery at a predetermined assessment time;
identifying the main user as the user closest to the first device in the video imagery at a current time; or
identifying the main user as the user located in a direction from which audio was captured that meets a predetermined audio criterion using the directional information of the spatial audio data.

7. An apparatus according to any preceding claim, wherein other-user-identifying criteria comprises one or more of:
identifying the one or more other users using facial recognition and predetermined facial recognition data;
identifying the one or more other users using facial recognition to identify users around the first device and excluding the main user; or
identifying the other user as the one or more users located in one or more corresponding directions from which audio was captured using the directional information of the spatial audio data and excluding the main user.

8. An apparatus according to any preceding claim, wherein the means are configured to:
receive main user audio from the second device for presentation by the first device with a third audio-modifying effect comprising a voice changer, wherein the main user audio is captured by the second device;
receive main user audio from a third device for presentation by the first device with a fourth audio-modifying effect, different to the third audio-modifying effect, and comprising a voice changer, wherein the main user audio is captured by the third device; and
provide for said presentation by the first device of the main user audio from both the second device and the third device.

9. An apparatus according to claim 8, wherein the means are configured to:
receive third avatar information from the second device for visual presentation by the first device, the third avatar information representative of a third avatar for representing at least the face of a main user of the second device, wherein the main user audio from the second device is the audio of the main user of the second device;
receive fourth avatar information from the third device for visual presentation by the first device, the fourth avatar information representative of a fourth avatar for representing at least the face of a main user of the third device, wherein the main user audio from the third device is the audio of the main user of the third device; and
provide for presentation of the third avatar and the fourth avatar at different locations on a display of the first device;
wherein the third audio-modifying effect is associated with the third avatar; and
wherein the fourth audio-modifying effect is associated with the fourth avatar.

10. An apparatus according to claim 9, wherein
said the third audio-modifying effect is associated with the third avatar in terms of the third avatar depicting a first animal and the third audio-modifying effect is configured to cause the audio to which it is applied to sound like said first animal; and
said the fourth audio-modifying effect is associated with the fourth avatar in terms of the fourth avatar depicting a second animal and the fourth audio-modifying effect is configured to cause the audio to which it is applied to sound like said second animal.

11. An apparatus according to any one of claims 8 to 10, wherein the means are configured to:
receive other user audio from the second device for presentation by the first device with a fifth audio-modifying effect wherein the other user audio is captured by the second device; and
receive other user audio from the third device for presentation by the first device with a sixth audio-modifying effect wherein the other user audio is captured by the third device; and
provide for said presentation by the first device of the other user audio from both the second device and the third device; wherein
the fifth audio-modifying effect applied to the other user audio from the second device is associated with the third audio-modifying effect applied to the main user audio from the second device;
the sixth audio-modifying effect applied to the other user audio from the third device is associated with the fourth audio-modifying effect applied to the main user audio from the third device.

12. An apparatus according to claim 11, in which the means are configured to:
receive fifth avatar information from the second device for visual presentation by the first device, the fifth avatar information representative of a fifth avatar for representing at least at least one other user of the second device, wherein the other user audio from the second device is the audio of the at least one other user of the second device;
receive sixth avatar information from the third device for visual presentation by the first device, the sixth avatar information representative of a sixth avatar for representing at least one other user of the third device, wherein the other user audio from the third device is the audio of the at least one other user of the third device; and
provide for presentation of the fifth avatar and the sixth avatar at different locations on a display of the first device.

13. An apparatus according to claim 11, wherein, the means are configured to, based on signalling, from one or both of the second device and the third device, indicative that the second device and the third device are in a common location,
determine at least one main user in video imagery captured by the second device based on facial recognition and main-user-identifying criteria;
determine at least one main user in video imagery captured by the third device based on facial recognition and main-user-identifying criteria;
determine at least one other user in video imagery captured by the second device based on facial recognition;
determine at least one other user in video imagery captured by the third device based on facial recognition;
group the least one other users determined from the video imagery of both the second and third device into a first group associated with the main user of the second device and a second group associated with the main user of the third device based on grouping criteria, wherein one or more other users determined from the video imagery captured by the second device who also appear in the video imagery captured by the third device are assigned to only one of said first group and said second group;
provide for display, by said first device, of the at least one other user of the first group as a fifth avatar; and
provide for display, by said first device, of the at least one other user of the second group as a sixth avatar; and
provide for revision of the grouping of the at least one other users determined from the video imagery of both the second and third device based on movement of the at least one other users relative to the at least one main user associated with said first and second group determined from said video imagery;
provide for display, by said first device, of the at least one other user of the revised first group as a fifth avatar; and
provide for display, by said first device, of the at least one other user of the revised second group as a sixth avatar.

14. A method, the method comprising:
receiving video imagery data and spatial audio data captured by a first device, the spatial audio data comprising audio and directional information indicative of the direction from which the audio was captured;
determining at least one main user in said video imagery based on main-user-identifying criteria;
determining at least one other user in said video imagery based at least on other-user-identifying criteria;
determining main user audio of the at least one main user from the spatial audio data using a direction to the determined at least one main user and said directional information;
determining other user audio of the at least one other user from the spatial audio data using a direction to the determined at least one other user and said directional information;
determining an avatar for representing the at least one main user or the at least one other users based on at least one of predetermined data and a user input;
providing for display, at the second device, of said avatar; and
providing for presentation, at a second device, of the main user audio and the other user audio, wherein at least one of the main user audio and the other user audio is provided for presentation with an audio-modifying effect, wherein the audio-modifying effect is pre-associated with said determined avatar.

15. A computer readable medium comprising computer program code stored thereon, the computer readable medium and computer program code being configured to, when run on at least one processor, perform the method of:
receiving video imagery data and spatial audio data captured by a first device, the spatial audio data comprising audio and directional information indicative of the direction from which the audio was captured;
determining at least one main user in said video imagery based on main-user-identifying criteria;
determining at least one other user in said video imagery based at least on other-user-identifying criteria;
determining main user audio of the at least one main user from the spatial audio data using a direction to the determined at least one main user and said directional information;
determining other user audio of the at least one other user from the spatial audio data using a direction to the determined at least one other user and said directional information;
determining an avatar for representing the at least one main user or the at least one other users based on at least one of predetermined data and a user input;
providing for display, at the second device, of said avatar; and
providing for presentation, at a second device, of the main user audio and the other user audio, wherein at least one of the main user audio and the other user audio is provided for presentation with an audio-modifying effect, wherein the audio-modifying effect is pre-associated with said determined avatar.
